# FASCICULE DE BREVET EUROPEEN

(11) **EP 4 065 462 B1**
(45) Date de publication et mention de la délivrance du brevet: **01.11.2023**
(21) Numéro de dépôt: 20775877.2
(22) Date de dépôt: 28.09.2020
(51) Int. Cl.: B63H 9/061

(54) **AILE DE PROPULSION D'UN ENGIN DE DEPLACEMENT, ET ENGIN DE DEPLACEMENT COMPRENANT UNE TELLE AILE DE PROPULSION**
ANTRIEBSFLÜGEL EINES SICH BEWEGENDEN FAHRZEUGS UND SICH BEWEGENDES FAHRZEUG MIT EINEM SOLCHEN ANTRIEBSFLÜGEL
PROPULSION WING OF A MOVING VEHICLE AND MOVING VEHICLE COMPRISING SUCH A PROPULSION WING

(30) Priorité: 28.11.2019 FR 1913358
(43) Date de publication de la demande: 05.10.2022
(73) Titulaire: CWS MOREL, 94100 Saint-Maur-des-Fosses (FR)
(72) Inventeur: DUCARNE, Julien, 94100 Saint-Maur-des-Fosses (FR); MOREL, Julien, 94100 Saint-Maur-des-Fosses (FR)
(74) Mandataire: Kessler, Marc
(86) Numéro de dépôt international: PCT/EP2020/077032
(87) Numéro de publication internationale: WO 2021/104715

(56) Documents cités:
- WO-A1-2017/006315
- WO-A1-2019/092533
- US-A- 3 934 533

## Description

### Objet de l'invention

La présente invention a trait à une aile de propulsion d'un engin de déplacement, terrestre, sur glace, ou nautique, en particulier une aile de propulsion éolienne, et à un engin de déplacement, par exemple un bateau, comprenant ou mettant en oeuvre une telle aile de propulsion.

### Etat de la technique

Les engins de déplacement, de personnes ou de biens, sont généralement mis en mouvement par des moyens de propulsion, qui classiquement mettent en oeuvre une force motrice, provenant par exemple d'un moteur, ou bien de la force du vent.

En particulier pour des bateaux, qu'ils soient d'ailleurs motorisés ou pas, il est connu d'employer, comme moyens de propulsion principaux, des voiles souples, la force motrice étant générée par l'action du vent dans les voiles.

De telles voiles souples, qui se déforment continuellement sous l'effet du vent, présentent l'inconvénient d'avoir un rendement de propulsion très variable, et l'inconvénient de générer d'importantes forces de traînée orientées vers l'arrière de l'engin de déplacement.

Il a été alors proposé l'emploi de voiles rigides, encore appelées « ailes de propulsion », permettant de générer une portance plus importante qu'une voile souple et une traînée plus faible.

De telles ailes de propulsion peuvent avoir un profile aérodynamique dit « symétrique », la cambrure des cotés des ailes étant symétrique par rapport au plan central et vertical de l'aile.

Par exemple, le document WO2013070070 décrit une aile rigide pour bateau, qui comprend un mat comprenant un pied solidaire du bateau, mais pouvant tourner autour d'un axe de rotation sensiblement vertical par rapport au bateau, pour ajuster l'angle d'incidence du vent. L'aile peut être affalée, afin de prendre moins de place lors de l'accostage ou de l'amarrage, par le fait que le mat n'est solidaire que de la portion inférieure de l'aile, deux autres sections supérieures de l'aile, pouvant se replier par basculement. Une telle aile présente des performances aérodynamiques bien inférieures à celle d'une aile asymétrique.

Toutefois, les ailes de propulsion à profil symétrique génèrent moins de portance qu'une aile à profil dit « asymétrique », c'est-à-dire qui présente une première face convexe, ou cambrée, et une seconde face plate, ou concave. Néanmoins, une aile asymétrique présente l'inconvénient de ne pas pouvoir être utilisée quelle que soit la direction du vent.

Il a été alors proposé, comme cela est décrit dans le document US2015000578, de disposer, de part et d'autre du navire, deux ailes de propulsion asymétriques, rigides, montées sur un mat en forme de « A » ; une solution qui présente l'inconvénient d'être encombrante et peu aisée de mise en oeuvre.

Le document WO2017006315, décrit quant à lui une aile rigide asymétrique, montée pivotante sur l'extrémité supérieure d'un mat, selon un axe de basculement se situant sensiblement au milieu de l'aile, la partie inférieure du mat étant montée sur une base, qui est, elle-même, montée pivotante sur le bateau. Une telle aile présente l'inconvénient de déstabiliser fortement le bateau qui la porte lors des changements de bords.

Par ailleurs, il a été également proposé, l'emploi d'une aile de propulsion rigide, qui soit déformable, à l'aide d'un structure de profil interne, articulée, permettant de faire passer l'aile de propulsion d'un premier profil asymétrique à un second profil asymétrique, en passant par un profil symétrique, comme cela est décrit par exemple dans le document WO2015193617.

Néanmoins, toutes ces ailes de propulsion présentent l'inconvénient d'être complexes à mettre en oeuvre et de ne pas être adaptées ou adaptables à toutes les conditions de vent.

### Buts de l'invention

La présente invention vise à fournir une aile de propulsion rigide et un engin de déplacement, qui ne présentent pas les inconvénients de l'état de la technique.

La présente invention vise à fournir une alternative aux solutions de l'état de la technique existantes.

La présente invention vise à fournir une aile rigide de propulsion qui est capable de s'adapter aux différentes conditions de vents.

La présente invention à fournir une aile rigide de propulsion asymétrique ayant un rendement de propulsion amélioré et qui soit utilisable quelle que soit la direction du vent.

La présente invention vise aussi à fournir une aile rigide ne comprenant pas de mât, et pouvant faire varier sa hauteur d'une façon rapide et aisée.

La présente invention vise également à fournir une aile rigide dont la mise en drapeau minimise les efforts générés, et se fait de manière passive.

### Résumé de l'invention

La présente invention porte sur une aile de propulsion rigide pour engin de déplacement, comprenant au moins une première section et une deuxième section, une première extrémité formée par une des extrémités de la première section et une deuxième extrémité formée par une des extrémités de la seconde section, les extrémités de l'aile de propulsion comprenant chacune des moyens de fixation pour une liaison réversible à l'engin de déplacement, la première section et la deuxième section étant mobiles l'une par rapport à l'autre à l'aide de moyens d'articulation pour que l'aile de propulsion prenne, et passe, d'au moins une première position dépliée à une seconde position dépliées, et inversement, des positions dépliées dans lesquelles la première section et la seconde section sont disposées, sensiblement verticalement, dans le prolongement l'une de l'autre, et dans lesquelles, la première extrémité, ou respectivement la deuxième extrémité, étant liées, de façon réversible, à l'engin de déplacement à l'aide de leur moyens de fixation.

Selon des modes préférés de l'invention, l'aile de propulsion selon l'invention comprend au moins une, ou une combinaison quelconque appropriée, des caractéristiques suivantes :
- l'aile de propulsion comprend en outre une section intermédiaire, disposée entre, et mobile par rapport à, la première section et la seconde section, à l'aide des moyens d'articulation,
- la première section, la deuxième section, et la section intermédiaire si elle est présente, sont mobiles, l'une par rapport à l'autre, à l'aide des moyens d'articulation pour que l'aile de propulsion prenne, et passe par, une position intermédiaire entre la première et la deuxième position dépliée, dans laquelle la première section et la deuxième section sont disposées, sensiblement parallèles l'une à l'autre, de part et d'autre d'un plan de symétrie sensiblement vertical, et dans laquelle la première extrémité et la deuxième extrémité sont toutes les deux liées, de façon réversible, à l'engin de déplacement, à l'aide de leur moyens de fixation,
- la première section, la deuxième section, et éventuellement la section intermédiaire si elle est présente, possèdent un profil aérodynamique asymétrique,
- les moyens d'articulation comprennent une bielle engagent la tige mobile de deux vérins fixés respectivement à la première section et la deuxième section,
- l'aile de propulsion comprend en outre des moyens de verrouillage des moyens d'articulation,
- l'aile de propulsion comprend en outre des moyens d'actionnement des moyens d'articulation pour mettre en mouvement les sections de l'aile de propulsion, comprenant un ensemble de poulies sur lesquelles chemine un câble lesté, dont chaque extrémité est reliée à un treuil,
- l'aile de propulsion comprend en outre au moins une embase, mobile par rapport à l'engin de déplacement, et comprenant des premiers moyens et des seconds moyens pour recevoir respectivement les moyens de fixation de la première extrémité et les moyens de fixation de la deuxième extrémité de l'aile de propulsion,
- les moyens de fixation de la première extrémité et les moyens de fixation de la deuxième extrémité comprennent chacun une platine de fixation munie des deux rainures, les premiers moyens et des seconds moyens pour recevoir les moyens de fixation, comprennent deux plots, fixés à l'embase et destinés à engager, et en fonctionnement, engageant, les rainures,
- l'aile de propulsion comprend en outre ou coopère avec des premiers et second moyens de verrouillage pour le blocage des moyens de fixation respectivement de la première extrémité et de la deuxième extrémité, lesdits moyens de verrouillage comprenant chacun une actionneur à ressort,
- l'aile de propulsion comprend en outre ou coopère avec des moyens interdisant l'ouverture simultanée des premiers et second moyens de verrouillage,
- l'aile de propulsion comprend en outre une dérive disposée sur une des sections de l'aile de propulsion et/ou une ou plusieurs ailettes disposées à la première extrémité et/ou de la deuxième extrémité,
- l'aile de propulsion comprend en outre ou coopère avec des moyens de commande des moyens d'articulation et/ou des moyens de commande de moyens de contrôle de l'incidence de l'aile de propulsion par rapport au sens du vent.

La présente invention porte également sur l'utilisation de l'aile de propulsion selon l'invention pour la propulsion principale, ou auxiliaire, d'un engin de déplacement.

La présente invention porte également sur un engin de déplacement, maritime ou terrestre, comprenant une ou plusieurs ailes de propulsion selon l'invention.

### Brève description des figures

La figure 1 est une représentation schématique d'une vue en perspective d'un premier mode de réalisation de l'aile de propulsion selon l'invention, ayant adoptée une première position dépliée.
La figure 2 est une représentation schématique d'une vue du dessous de l'aile de propulsion selon l'invention.
La figure 3 est une représentation schématique d'une vue en perspective de l'aile de propulsion selon le premier mode de réalisation, ayant adoptée sa position repliée.
La figure 4 est une représentation schématique d'une vue coupe longitudinale de l'aile de propulsion selon le premier mode de réalisation, ayant adoptée sa position repliée.
La figure 5 est une représentation schématique d'une vue de dessus de l'aile de propulsion selon l'invention, ayant adoptée sa position repliée.
La figure 6 est une représentation schématique d'une vue en perspective des moyens de verrouillage des sections formant l'aile de propulsion selon l'invention, dans une forme déverrouillée.
La figure 7 est une représentation schématique d'une vue en perspective des moyens de verrouillage des sections formant l'aile de propulsion selon l'invention, dans une forme verrouillée.
La figure 8 est une représentation schématique d'une vue en perspective d'un second mode de réalisation de l'aile de propulsion selon l'invention, ayant adoptée une première position repliée.
La figure 9 est une représentation schématique d'une vue en perspective d'une position intermédiaire durant le repliement de l'aile de propulsion selon le second mode de réalisation.
La figure 10 est une représentation schématique d'une vue de face des moyens mis en oeuvre pour plier et déplier l'aile de propulsion selon le second mode de réalisation.
La figure 11 est une représentation schématique d'une vue en perspective de l'aile de propulsion selon le second mode de réalisation, ayant adoptée sa position repliée.
La figure 12 est une représentation schématique d'une vue en perspective d'un second mode de réalisation de l'aile de propulsion selon l'invention, ayant adoptée sa seconde position repliée.
La figure 13 est une représentation schématique d'une vue en perspective des moyens de verrouillage de l'aile de propulsion selon l'invention sur sa base.
La figure 14 est une représentation schématique d'une vue de des moyens de verrouillage de l'aile de propulsion selon l'invention sur sa base, dans une position verrouillée.
La figure 15 est une représentation schématique d'une vue de des moyens de verrouillage de l'aile de propulsion selon l'invention sur sa base, dans une position déverrouillée.
La figure 16 est une représentation schématique d'une vue de face des moyens empêchant la libération simultanée des moyens de verrouillages des extrémités de l'aile de propulsion sur l'engin de déplacement.
La figure 17 est une représentation schématique d'une vue en perspective de l'aile de propulsion selon le premier mode de réalisation comprenant des moyens de stabilisation aérodynamique.
La figure 18 est une représentation schématique d'une vue en perspective du second mode de réalisation de l'aile de propulsion selon l'invention comprenant un profil aérodynamique variable.

### Description détaillée de l'invention

Dans la suite de la description et des revendications, le terme « longueur » est utilisé pour décrire la plus grande des mesures de l'aile de propulsion 1 selon l'invention, ou des éléments qui la composent, et le terme « largeur » pour décrire la plus petite des mesures de l'aile de propulsion 1 selon l'invention, ou des éléments qui la composent, quelle que soit leur forme géométrique, les termes « longueur » et « largeur » pouvant être utilisés indifféremment, si l'aile de propulsion 1 selon l'invention, ou les éléments qui la composent, ont une forme sensiblement carrée.

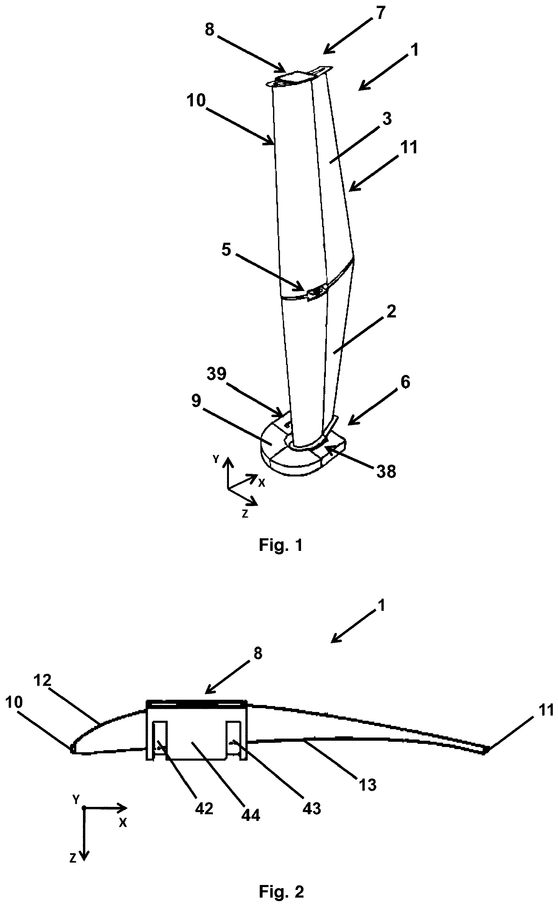

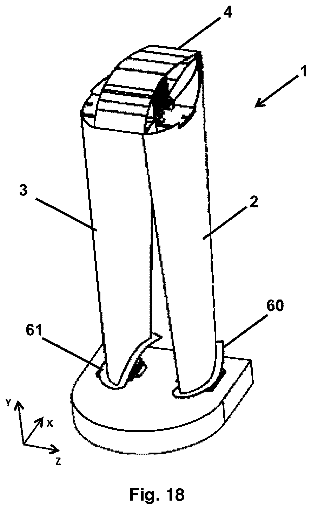

Les termes « haut », « bas », « supérieur », « inférieur », « avant », « arrière », « vertical » ou « horizontal » font référence à la position horizontale de l'aile de propulsion 1 selon l'invention, et des éléments la constituant, comme représentés aux figures 1 à 18.

L'aile de propulsion 1 selon l'invention est une aile de propulsion éolienne, permettant le déplacement de l'engin qui la porte, grâce à la force du vent. Il ne s'agit pas d'une aile pour faire décoller l'engin, afin qu'il ne touche plus le sol ou la surface de l'eau.

L'aile de propulsion 1 est rigide, et elle est dite « autoportante », car elle ne se déforme sensiblement pas sous l'action du vent, et ne plie pas sous son propre poids.

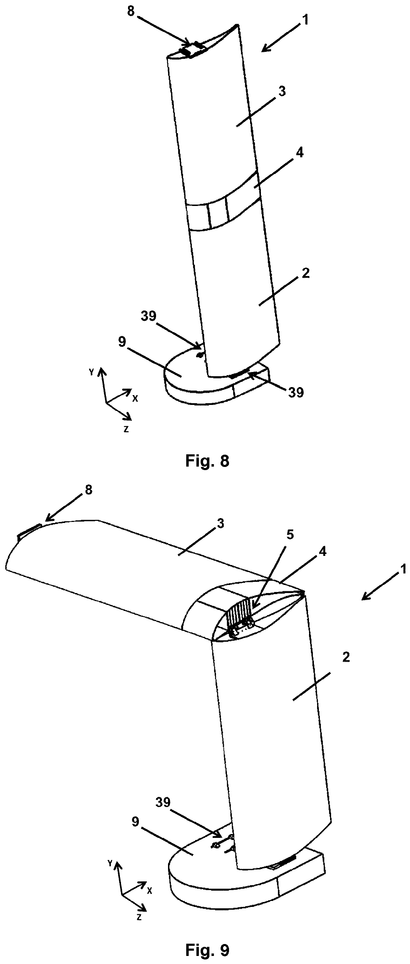

L'aile de propulsion 1 est dite « sectionnelle », car elle comprend, ou est faite, d'au moins une première section 2 et une deuxième section 3 (figures 1 à 4), de préférence également une section intermédiaire 4, disposée entre la première section 2 et la seconde section 3 (figures 8 à 12), avantageusement d'une multitude de sections, les sections étant mobiles les unes par rapport aux autres à l'aide de moyens d'articulation 5.

Les sections 2, 3, et la section intermédiaire 4 si elle est présente, forment une unité structurelle. Cela présente l'avantage de ne pas nécessiter l'emploi d'une structure inamovible et portante, du type mât.

De préférence, les sections 2, 3 et 4 comprennent, ou sont faites, d'une enveloppe creuse, comprenant, ou faite, d'une peau métallique nervurée ou d'un matériau composite, l'enveloppe pouvant éventuellement comprendre une structure interne de renfort, ce qui présente l'avantage d'avoir une aile d'un poids contenu.

De préférence, les sections 2, 3 et 4 sont, l'une, l'autre ou toutes, télescopiques.

L'aile de propulsion 1 comprend une première extrémité 6, formée par une des extrémités de la première section 2, et une deuxième extrémité 7, formée par une des extrémités de la seconde section 3. Chacune des extrémités 6 et 7 de l'aile de propulsion 1 comprend des moyens 8 de fixation réversible à l'engin de déplacement, de préférence par l'intermédiaire d'une ou plusieurs embases 9, qui est ou sont liées à l'engin de déplacement de préférence de façon mobile, avantageusement une embase 9 par extrémités 6, 7 de l'aile de propulsion 1.

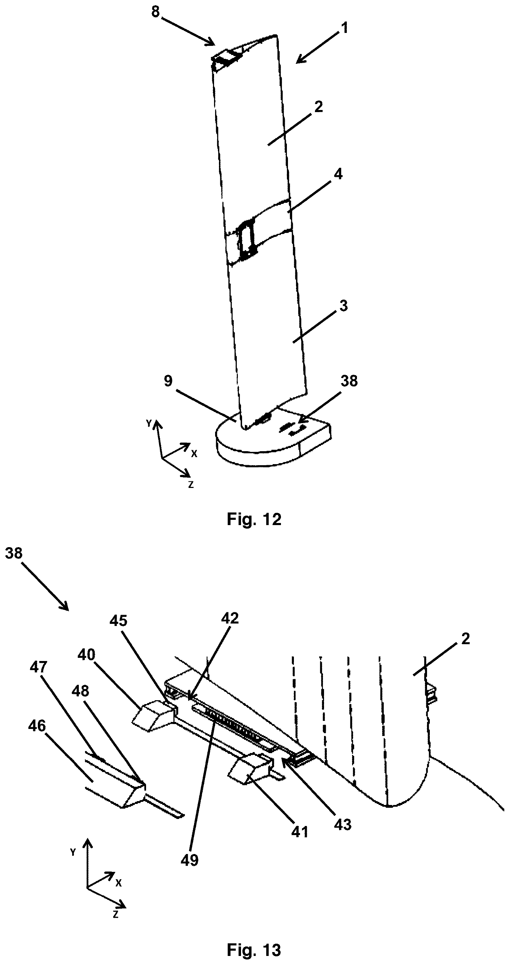

L'aile de propulsion 1 peut adopter une première position dépliée, ou déployée (figures 1, 8, 12, 17), afin de prendre le vent d'un des bords de l'engin de déplacement et d'avoir une portance optimale, pour passer à, et adopter, une seconde position dépliée (figure 12), symétrique de la première position dépliée, selon un plan de symétrie dans le plan X-Y, afin de prendre le vent sur l'autre bord de l'engin de déplacement, également avec une portance optimale, et inversement, l'aile de propulsion pouvant passer de la seconde position dépliée à sa première position dépliée, tout en pouvant adopter toutes les positions intermédiaires entre la première ou la seconde positon dépliée, chaque position extrême ou intermédiaire étant de préférence verrouillables et déverrouillables. L'aile de propulsion 1 présente ainsi l'avantage de pouvoir être utilisée quelle que soit la direction du vent.

Dans ces positions dépliées, la première section 2, la seconde section 3, et éventuellement la section intermédiaire 4 si elle est présente, sont disposées sensiblement dans le prolongement l'une de l'autre, sensiblement verticalement, selon un axe sensiblement parallèle à l'axe Y, l'aile de propulsion 1 étant fixée à l'engin de déplacement, de préférence par l'intermédiaire de l'embase 9, par sa première extrémité 6 dans la première position dépliée, et par sa seconde extrémité 7, dans la seconde position dépliée.

Dans la première position dépliée, la première section 2 est une section inférieure de l'aile de propulsion 1, proche de l'engin de déplacement, ou de l'embase 9, et dont l'extrémité inférieure est fixée l'engin de déplacement, ou à l'embase 9, son extrémité supérieure étant liée à la seconde section 3 qui constitue la section supérieure de l'aile 1, qui n'est pas fixée à l'engin de déplacement ou à l'embase 9.

Dans le seconde positon dépliée, la seconde section 3 est la section inférieure de l'aile de propulsion 1, dont une des extrémités est fixée à l'engin de déplacement ou à l'embase 9, alors que la première section 2 constitue la section supérieure de l'aile, une section non fixée à l'engin de déplacement ou à l'embase 9.

Lors de son passage d'une position dépliée à l'autre position dépliée, l'aile de propulsion 1 a basculé par rapport à un plan sensiblement parallèle au plan X-Y, d'un angle de 180°. Ainsi, les extrémités 6 et 7 forment alternativement le haut et le bas de l'aile de propulsion 1.

Dans le mode de réalisation dans lequel les sections 2, 3, et éventuellement la section intermédiaire 4, sont télescopiques, elles peuvent comprendre, ou être faites de, deux parois articulées le long de leur profil aérodynamique pour pouvoir se plier en deux, une des deux parois sur l'autre, contre l'engin de déplacement, les parois de la ou des sections supérieures se repliant sur les parois de la section qui leurs sont inférieures, ce qui présente l'avantage d'avoir une aile de propulsion 1 qui peut passer d'une des postions dépliés à une position affalée dans laquelle l'aile de propulsion 1 présente un encombrement réduit.

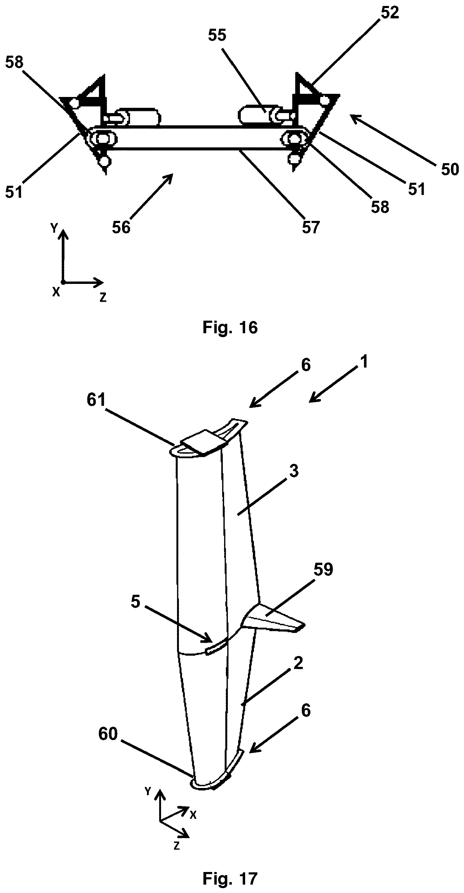

Dans ces positions dépliées, l'aile de propulsion 1, et donc les sections 2, 3 et 4 qui la composent, présentent un profil aérodynamique général asymétrique, qui peut être variable sur la longueur de l'aile de propulsion 1. De préférence, la première section 2 et la seconde section 3 sont symétriques l'une de l'autre par rapport à un plan de symétrie parallèle au plan X-Z (figure 8), mais elles peuvent également présenter un profil aérodynamique différent l'un de l'autre (figure 17), tout en procurant, à l'aile de propulsion 1, un profil aérodynamique général asymétrique.

L'aile de propulsion 1 comprend un bord d'attaque 10, un bord de fuite 11, opposé au bord d'attaque, un extrados 12 et un intrados 13 (figure 2).

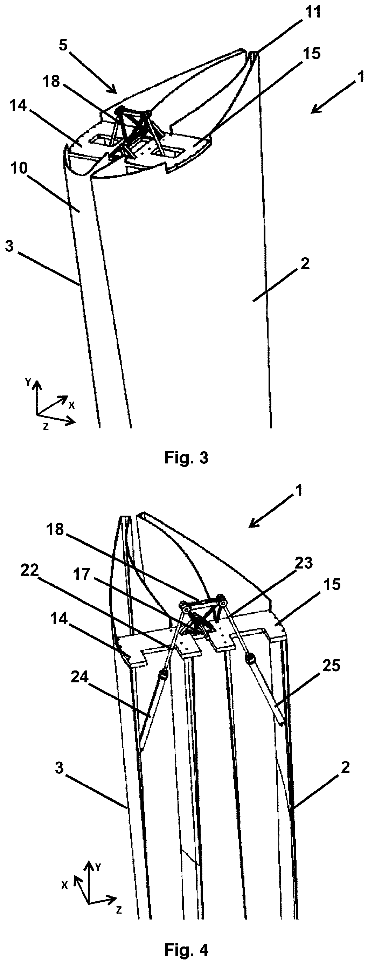

L'aile de propulsion 1 peut également adopter une position repliée (figures 3, 11, 18), qui est intermédiaire entre les deux positions dépliées, c'est-à-dire que l'aile de propulsion 1 peut adopter, et passe, par cette position intermédiaire lors de sa transition entre les deux positions dépliées.

Dans sa position intermédiaire, la première section 2 et la deuxième section 3 sont disposées, de préférence sensiblement parallèles l'une à l'autre, de part et d'autre d'un plan de symétrie vertical, parallèle au plan X-Y, l'aile de propulsion 1 étant fixée à l'engin de déplacement, la première extrémité 6 et la seconde extrémité 7 de l'aile de propulsion 1 étant toutes les deux fixées sur l'engin de déplacement ou sur une embase 9, ou bien chacune sur une embase 9 distincte.

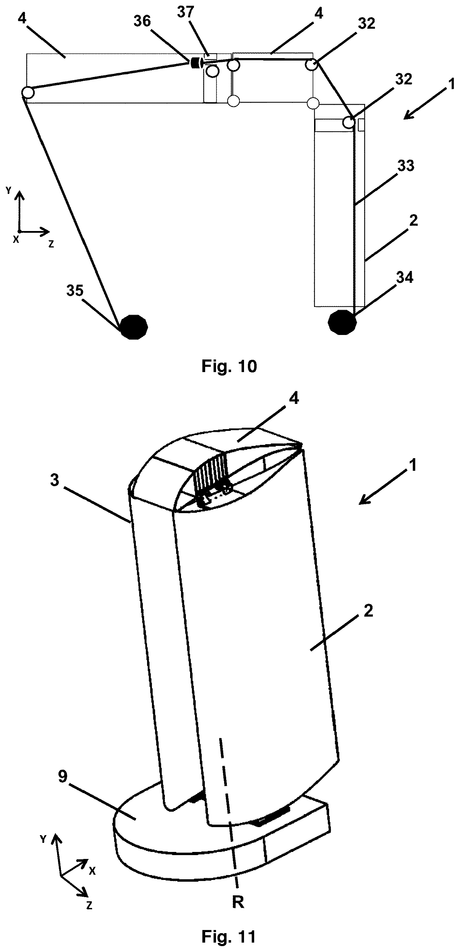

Dans la position intermédiaire de l'aile de propulsion 1, la première section 2 et la seconde section 3 ont un profil aérodynamique asymétrique, mais, de par leur disposition, elles forment, et permettent à l'aile de propulsion 1 d'adopter, un profil aérodynamique sensiblement symétrique (figures 3 et 11). De préférence, il s'agit d'un profil aérodynamique sensiblement identique, ou équivalent, dans sa forme générale, à un profil du type NACA.

La position intermédiaire de l'aile de propulsion 1 présente l'avantage de réduire la surface de prise au vent, de présenter un profil aérodynamique symétrique à la portance réduite par rapport à un profil aérodynamique asymétrique, et donc de réduire fortement la poussée de l'aile de propulsion 1, tout en permettant néanmoins, si nécessaire, de générer une poussée dans deux directions du vent, pour des besoins de manoeuvre par exemple. Elle permet d'avoir un encombrement réduit, en particulier une hauteur réduite, et d'atténuer le fardage de l'engin de déplacement.

L'aile de propulsion 1 présente ainsi l'avantage de pouvoir s'adapter aux différentes conditions et directions du vent, lors du déplacement ou des manoeuvres de l'engin qui la porte, en pouvant adopter différents profils aérodynamiques, et en pouvant passer aisément d'un profil à un autre, ce qui permet à l'engin de déplacement, qui la porte, d'avoir un comportement plus réactif.

Le passage entre les différentes positions dépliées et la position repliée de l'aile de propulsion 1, se fait grâce aux moyens d'articulation 5, qui sont de préférence des moyens faisant charnière.

Dans les modes de réalisation dans lesquels, l'aile de propulsion 1 est constituée des deux sections 2 et 3 (figure 1), ces dernières ont sensiblement la même longueur, afin de ne pas déstabiliser l'engin de déplacement lors du passage de l'aile de propulsion 1 d'une position à une autre. Les moyens d'articulation 5 sont, de préférence, disposés à mi-longeur de l'aile de propulsion 1, et sont aptes à faire pivoter chacune des sections 2 et 3 d'un angle de 180°, l'une par rapport à l'autre, et permettent le basculement de l'aile de propulsion 1 d'un bord à l'autre de l'engin de propulsion ou de l'embase 9.

De préférence, les moyens d'articulation 5 sont aptes à permettre la rotation des deux sections 2 et 3 dans un plan sensiblement parallèle au plan X-Z, ce qui présente l'avantage de permettre de changer l'incidence de l'aile de propulsion 1 sur sa longueur.

De préférence, les moyens d'articulation 5 comprennent, ou mettent en oeuvre, deux pièces de liaison 14 et 15, reliées par des entretoises 16, disposées sensiblement au centre des pièces de liaison 14,15, des entretoises 16 recevant, et étant mobiles en rotation, par rapport à un axe de rotation 17, ce dernier engageant l'extrémité d'une bielle 18, qui est de préférence de forme triangulaire, au niveau d'un point de pivot inférieur 19. La bielle 18 comprend en outre deux points de pivots supérieurs 20 et 21, au niveau desquels sont fixées respectivement l'extrémité des tiges mobiles 22, 23 de deux vérins 24, 25, les tiges mobiles 22, 23 traversant respectivement les ouvertures 26, 27 pratiquées respectivement dans chacune des pièces de liaison 14 et 15. Chaque vérin 24, 25 est fixé à l'intérieur de chaque section 2 et 3, au niveau de leur extrados, de préférence par l'intermédiaire d'un support ou d'un cadre (figures 3 à 5).

L'actionnement d'un ou des vérins 24, 25 provoque le rapprochement d'une pièce de liaison 14 ou 15 vers l'autre pièce de liaison 14 ou 15, provoquant le basculement d'une des sections 2 ou 3 vers l'autre section 2 ou 3, et permet leur alignement.

De préférence, dans ces positions dépliées, l'aile de propulsion 1 comprend ou met en oeuvre des moyens 28 de verrouillage afin de verrouiller ces positions.

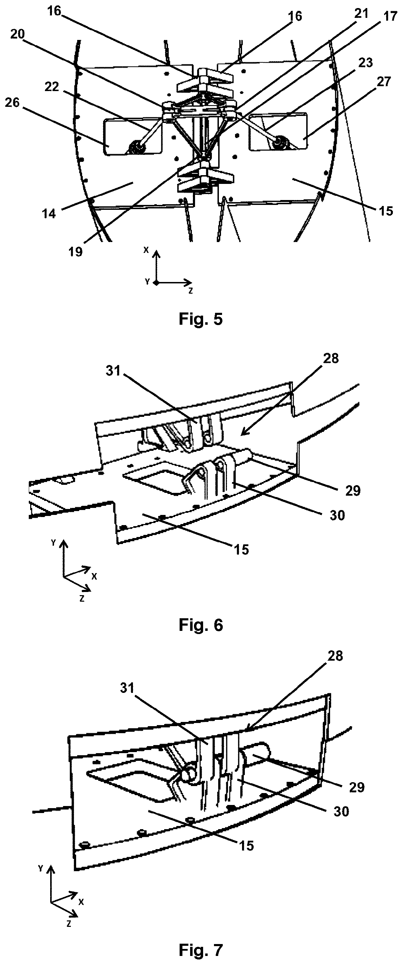

De préférence, comme cela est représenté aux figures 6 et 7, ces moyens 28 de verrouillage comprennent, par exemple, un poussoir 29, électromécanique ou hydraulique, venant engager les orifices d'une ou plusieurs pattes de fixation, ou d'une ou plusieurs entretoises 30 et 31, disposées respectivement sur l'extrémité de chaque section 2, 3, de préférence, sur et au bord des pièces de liaison 14 et 15. Les pattes de fixation ou les entretoises 30 et 31, de chaque pièce de liaison 14, 15, viennent se positionner en rapport les unes avec les autres, afin d'aligner leurs orifices, et de préférence, viennent s'intercaler les unes avec les autres (figure 7).

Dans les modes de réalisation dans lesquels, l'aile de propulsion 1 comprend la première section 2, la deuxième section 3, et la section intermédiaire 4 (figures 9 à 13), la section intermédiaire 4 est disposée, de préférence, sensiblement à milongueur de l'aile de propulsion 1.

Dans la position repliée de l'aile de propulsion 1, la section intermédiaire 4 est disposée sensiblement horizontalement, dans un plan parallèle au plan X-Z.

La section intermédiaire 4 possède une largeur adéquate, permettant à la première section 2 et la seconde section 3, par leur disposition de part et d'autre du plan de symétrie parallèle au plan X-Y, de former, et permettre à l'aile de propulsion 1 d'adopter, un profil aérodynamique sensiblement symétrique, de préférence sensiblement identique, ou équivalent, dans sa forme générale, à un profil du type NACA.

Les moyens d'articulation 5 sont disposés entre la section intermédiaire 4 et la première section 2 d'une part, et la deuxième section 3 d'autre part. Ils sont ou comprennent tous moyens adéquats formant charnière pour un basculement des sections 2, 3, 4 d'un angle allant jusqu'à 90° par rapport à un axe de rotation sensiblement parallèle à l'axe X.

Par exemple, il peut s'agir d'une succession de chapes sur la face intrados des sections 2, 3 ou 4 voisines, et d'un axe passant dans chaque chape.

De préférence, ces moyens d'articulation 5 comprennent, mettent en oeuvre ou coopèrent avec, des moyens d'actionnement du mouvement des sections 2, 3, 4, comprenant avantageusement un ensemble de poulies 32, ou un ou plusieurs palans de trois à six brins par exemple, situé dans la section intermédiaire 4 recevant un câble 33, cheminant dans chaque section 2 et 3, un câble 33 dont une première extrémité est liée à un premier treuil 34, situé à proximité de, ou dans, la première section 2 ou dans l'embase 9, l'autre extrémité du câble 33 étant liée à un second treuil 35, situé à proximité de, ou dans, la seconde section 3 ou dans l'embase 9. Le câble 33 peut être mis en mouvement par le premier et/ou le second treuil 34, 35. De préférence, le câble 33 est maintenu tendu par l'emploi d'un ou plusieurs poids 36, par exemple des plombs, solidaires du câble 33, qui sont disposés avantageusement de manière à ce qu'ils se déplacent dans les sections 2, 3 jusqu'à se coincer dans un rétrécissement 37 pratiqué dans le passage de câble 33 pratiqué dans les sections 2, 3, ce qui permet d'obtenir une tension de câble 33 plus importante du coté du treuille 34 ou 35 qui enroule le câble, permettant ainsi de soulever la section 2 ou 3 à lever (figure 10).

En plus des positions dépliées et de sa position repliée, l'aile de propulsion 1 peut adopter des positions intermédiaires supplémentaires, comme par exemple celle représentée à la figure 9, dans laquelle, ou lesquelles, l'une des sections 2 ou 3 est disposée sensiblement verticalement, alors que l'autre sections 2 ou 3 et la section intermédiaire 4 sont disposées dans le prolongement l'une de l'autre, sensiblement horizontalement. Cela permet de réduire l'encombrement de l'aile de propulsion 1 et d'avoir une prise au vent qui ne soit pas totalement réduite ou totalement augmentée.

Quel que soit le mode de réalisation de l'aile de propulsion 1, et quelle que soit la position qu'elle adopte, l'aile de propulsion 1 est toujours fixée par au moins une de ces extrémités 6 et/ou 7 à l'engin de déplacement, de préférence à une embase 9, ou une embase 9 par extrémités 6, 7.

L'engin de déplacement, l'embase 9, ou les embases 9, comprennent à ces fins des moyens de réception réversible des moyens 8 de fixation de l'aile de propulsion 1 à l'engin de déplacement. Ces moyens comprennent des premiers moyens 38 pour recevoir, et en fonctionnement recevant, de façon réversible, les moyens 8 de fixation de la première extrémité 6 de l'aile de propulsion 1 (figure 13) et des seconds moyens 39 recevant, également de façon réversible, les moyens 8 de fixation de la deuxième extrémité 7 de l'aile de propulsion 1, les premiers et seconds moyens 38, 39 de fixation étant disposés à distance les uns des autres, décalés horizontalement, dans un plan sensiblement parallèle au plan X-Z.

Dans un mode de réalisation particulier, les premiers et seconds moyens 38, 39 de réception réversible des moyens 8 de fixation de l'aile de propulsion 1, sont, ou comprennent, un plot 40, de préférence deux plots 40, 41, fixés par tous moyens adéquats à l'embase 9, et engageant une rainure 42, de préférence respectivement deux rainures 42, 43, pratiquée sur ou dans les moyens 8 de fixation aux extrémités 6, 7 de l'aile de propulsion 1, qui, de préférence, sont ou comprennent une platine 44 de fixation, les rainures 42, 43 s'étendant le long de la surface inférieure de la platine 44 (figure 2). Cela présente l'avantage d'empêcher des mouvements verticaux et latéraux des sections 2 et 3 par rapport à l'embase 9 si elle est présente, et donc par rapport l'engin de déplacement.

De préférence, les plots 40, 41 comprennent des moyens 45 formant butée contre le fond des rainures 42, 43, et pouvant éventuellement également former amortissement et/ou être des moyens de désengagement des plots 40, 41 des rainures 42, 43 contre la force d'un ressort qui se trouve comprimer lorsque les plots 40, 41 se trouvent en butée au fond des rainures 42, 43.

De préférence, les moyens 38, 39 de réception réversible des moyens 8 de fixation de l'aile de propulsion 1 comprennent en outre un plot 46, de préférence comprenant des moyens 47, 48 formant butée, le plot 46 étant fixé par tous moyens adéquats à l'embase 9, à une distance adéquate des plots 40 et 41, pour engager une rainure 49 pratiquée dans un bord de la platine 44, lorsque les plots 40 et 41 engagent les rainures 42, 43 ou lorsqu'ils sont en butée au fond des rainures 42, 43.

De préférence, les moyens 47, 48 formant butée du plot 46 peuvent éventuellement également former amortissement et/ou être des moyens de désengagement du plot 46 de la rainure 49, contre la force d'un ressort qui se trouve comprimer lorsque le plot 46 se trouve en butée au fond de la rainure 49.

De préférence, les premiers et seconds moyens 38, 39 de réception des moyens 8 de fixation de l'aile de propulsion 1, comprennent ou coopèrent avec des moyens facilitant le glissement des moyens 8 de fixation des extrémités 6, 7, en particulier de la platine 44, sur l'engin de déplacement, sur l'embase 9 ou les embases 9. Ces moyens comprenant, de préférence, au moins une bande 62 de glissement, avantageusement une première bande de glissement 62 disposée adjacente aux plots 40 et 41 et une seconde bande de glissement 62 disposée adjacente aux moyens 47, 48 formant butée.

De préférence, les premiers et seconds moyens 38, 39 de réception des moyens 8 de fixation de l'aile de propulsion 1, coopèrent avec deux séries de moyens 50 de verrouillage des sections 2, 3, sur l'engin de propulsion ou sur l'embase 9, une série de moyen 50 par section 2 et 3 de l'aile de propulsion 1.

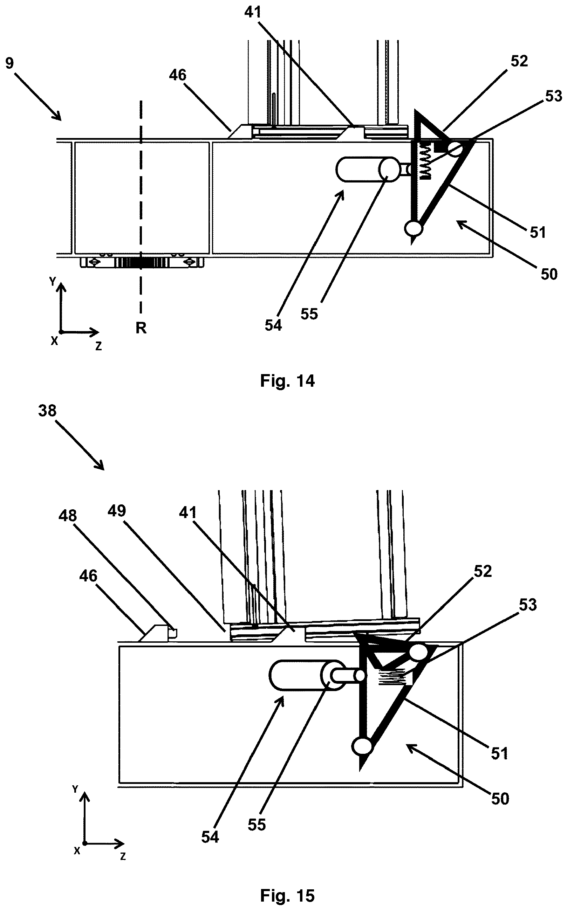

Ces moyens 50 de verrouillage sont, ou comprennent, un actionneur à ressort 51, de préférence disposé dans l'engin de déplacement ou à l'intérieur de l'embase 9, comprenant une portion 52 de blocage, par exemple une lame, mobile sur un axe sensiblement parallèle à l'axe X, et mobile contre la force d'un ressort 53, et passant d'une position verrouillée (figure 14) à une position déverrouillée ou partiellement déverrouillée (figure 15) et inversement, et pouvant adopter toutes les positions intermédiaires entre ces deux positions.

Dans la position verrouillée, la portion 52 de blocage s'étendant verticalement, selon un axe sensiblement parallèle à l'axe Y, par rapport, depuis, et au delà de la surface supérieure de l'engin de déplacement ou de l'embase 9, afin de bloquer tous mouvements latéraux, selon l'axe sensiblement parallèle à l'axe Z, de l'extrémité 6 de la première section 2, ou de l'extrémité 7 de la seconde section 3 de l'aile de propulsion 1. Dans cette position le ressort 53 est relâché.

Dans l'une des positions déverrouillées, la portion 52 de blocage ne s'étendant pas verticalement. Elle s'étend, soit de façon oblique au-dessus de l'engin de déplacement ou de l'embase 9, soit sensiblement horizontalement afin d'affleurer la surface supérieure de l'engin de déplacement ou de l'embase 9, soit elle s'étend à l'intérieur de l'engin de déplacement ou de l'embase 9. Dans ces positons, le ressort 53 est comprimé.

De préférence, la portion 52 de blocage a une section transversale, dans un plan sensiblement parallèle au plan Y-Z, de forme sensiblement triangulaire, avec une paroi oblique faisant face au coté de l'engin de propulsion par lequel l'extrémité 6 ou 7, de la section 2 ou 3, approche les moyens 38, 39 de réception réversible des moyens 8 de fixation de l'aile de propulsion 1. L'extrémité 6 ou 7 entre en contact avec cette paroi oblique et entraine la rotation de la portion 52 de blocage, qui comprime le ressort 53, afin qu'elle se couche sensiblement horizontalement, pour, une fois l'extrémité 6 ou 7 l'ayant passé, se relève automatiquement grâce à la détente du ressort 53, pour bloquer ainsi l'extrémité 6 ou 7 dans les moyens 38, 39 de réception réversible des moyens 8 de fixation de l'aile de propulsion 1.

De préférence, les deux séries de moyens 50 de verrouillage des sections 2, 3, sur l'engin de propulsion, ou sur l'embase 9, comprennent ou coopèrent avec des moyens 54 de contrôle du déverrouillage des moyens 50 de verrouillage. Par exemple, un actionneur d'ouverture, est disposé au niveau d'une des extrémités 6 ou 7 de l'aile de propulsion 1, et est contrôlé électriquement, par un interrupteur poussoir 55, situé au niveau de l'autre des extrémités 6 ou 7. Ainsi, si l'une des extrémités 6 ou 7 engage les moyens 38 ou 39 de réception des moyens 8 de fixation de l'aile de propulsion 1, le poussoir est enfoncé et l'actionneur d'ouverture de l'autre extrémité 6 ou 7 peut être alimenté ; dans le cas contraire, si l'une des extrémités 6 ou 7 n'engage pas les moyens 38 ou 39 de réception des moyens 8 de fixation, le poussoir n'est pas enfoncé et l'interrupteur poussoir 55 est ouvert, l'autre extrémité 6 ou 7 ne peut être déverrouillée, même accidentellement.

De préférence, les deux séries de moyens 50 de verrouillage des sections 2, 3, sur l'engin de propulsion, ou sur l'embase 9, comprennent, ou coopèrent, avec des moyens 56 interdisant l'ouverture simultanée des deux moyens 50 de verrouillage. Ces moyens 56 comprennent, par exemple, une biellette 57 comprenant des trous 58 débouchants, de préférence de forme oblong, dans lesquels s'engagent des axes solidaires des deux actionneurs 51. La longueur de la biellette et celle des trous oblongs permettent un jeu correspondant à l'ouverture d'un seul des actionneurs 51 à la fois, mais pas à leur ouverture simultanée.

Quel que soit le mode de réalisation de l'aile de propulsion 1, cette dernière comprend, de préférence, des moyens de contrôle de l'incidence, de l'orientation, de l'aile de propulsion 1 par rapport au vent, qu'elle ait adopté l'une ou l'autre de ses formes dépliées ou sous sa forme repliée. L'aile de propulsion 1 est montée mobile par rapport à l'engin de déplacement qui la porte, de préférence mobile dans les trois dimensions, avantageusement mobile en rotation, dans un plan sensiblement parallèle au plan X-Z, et/ou en inclinaison, dans un plan sensiblement parallèle au plan Y-Z.

De tels moyens de contrôle de l'incidence présentent l'avantage d'optimiser la position de l'aile de propulsion 1 lorsque cette dernière adopte l'une ou l'autre de ces postions dépliées, mais également de permettre de se positionner librement par rapport au vent, et donc d'optimiser la propulsion de l'engin de déplacement tout en limitant les efforts structuraux.

De préférence, ces moyens de contrôle de l'incidence sont ou comprennent la ou les embases 9, qui sont montées mobiles par rapport à l'engin de propulsion, dans les trois dimensions, avantageusement mobile en rotation, dans un plan sensiblement parallèle au plan X-Z, et/ou en inclinaison, dans un plan sensiblement parallèle au plan Y-Z.

De préférence, la rotation de l'embase 9 se fait selon un axe de rotation, qui suit les mouvements d'inclinaison de l'embase 9 par rapport à l'engin de déplacement. Il peut donc être sensiblement parallèle à l'axe Y ou sensiblement oblique par rapport à l'axe Y, selon que l'embase 9 est inclinée ou non par rapport à la surface supérieure de l'engin de propulsion.

De préférence, l'axe de rotation de l'embase 9 se situe entre les moyens 38 et 39 recevant les moyens 8 de fixation des extrémités 6 et 7 de l'aile de propulsion 1. Avantageusement, l'axe de rotation R de l'embase 9 est disposé décalé par rapport au profil de l'aile de propulsion, ce qui permet à cette dernière de se stabiliser en drapeau sur des positions où elle génère moins d'effort.

Lorsque l'aile de propulsion 1 adopte sa position repliée, l'axe de rotation R de l'embase 9 se trouve dans le plan de symétrie entre les deux sections 2 et 3, décalé en avant de l'axe formé par les moyens 38, 39 de réception des moyens 8 de fixation de l'aile de propulsion 1 (figure 11), de préférence à 20 ou 30% de la corde. Comme les moyens 38, 39 sont disposés de part et d'autre du plan de symétrie entre les deux sections 2 et 3, ce décalage de l'axe de rotation R vers l'intrados présente l'avantage d'améliorer le comportement en drapeau de l'aile de propulsion 1 en position entièrement déployée.

De préférence, les moyens de contrôle de l'incidence de l'aile de propulsion comprennent ou coopèrent avec des moyens de verrouillage des mouvements de l'aile de propulsion 1 ou de l'embase 9.

Quel que soit le mode de réalisation de l'aile de propulsion 1, cette dernière peut comprendre en outre des moyens aérodynamiques supplémentaires, des appendices aérodynamiques, disposés sur ces sections 2, 3 et/ou 4, ou ces extrémités 6, 7.

Par exemple, l'aile de propulsion 1 peut comprendre une dérive 59 (figure 17), de préférence disposée au niveau, ou sur, la section intermédiaire 4, qui présente l'avantage de créer un moment piqueur, aidant l'aile de propulsion 1 à se stabiliser soit en position dépliée soit en position repliée.

L'aile de propulsion 1 peut comprend une ou plusieurs ailettes 60, 61, disposées à l'une ou l'autre ou ses deux extrémités 6, 7.

Quel que soit le mode de réalisation de l'aile de propulsion 1, cette dernière peut comprendre en outre des moyens d'aspiration ou de soufflage, permettant d'en changer les propriétés aérodynamiques.

Par exemple, les moyens d'aspiration ou de soufflage peuvent comprendre au moins un ventilateur, disposé à proximité ou à l'intérieur de l'aile de propulsion 1, dont l'axe de soufflage ou d'aspiration est parallèle à l'axe longitudinal de l'aile de propulsion 1, afin d'aspirer de l'air vers l'intérieur de l'aile de propulsion 1 sur toute sa longueur et de l'expulser vers l'extrémité 6 ou 7 qui n'est pas fixé à l'engin de déplacement ou à l'embase 9, ou bien afin d'aspirer l'air depuis un ou plusieurs orifices situés sur l'extrados de l'aile de propulsion 1 et de l'expulser par des orifices situés sur l'extrados ou le bord de fuite, ce qui permet de modifier la portance et la traînée du profil aérodynamique, en agissant en particulier sur la couche limite de l'écoulement de l'air sur le profil, et donc de modifier la courbe portance / trainée de l'aile de propulsion en augmentant l'angle auquel le décrochage survient.

Quel que soit le mode de réalisation de l'aile de propulsion 1, cette dernière peut comprendre ou coopérer avec :
- des moyens de commande des moyens 38, 39 de réception des moyens 8 de fixation de l'aile de propulsion 1 et/ ou des moyens 50 de verrouillage des sections 2, 3, sur l'engin de propulsion ou sur l'embase 9 ou les embases 9, et/ou
- des moyens de commande du déploiement ou repliement de l'aile de propulsion 1 dans l'une ou l'autre de ces positons extrêmes ou intermédiaire, et donc de commande des moyens d'articulation 5 ou de l'ensemble d'actionnement, et/ou
- des moyens de commande des moyens de contrôle de l'incidence de l'aile de propulsion 1 par rapport au sens du vent, et/ou des moyens de verrouillage des mouvements de l'aile de propulsion 1 ou de l'embase 9, ou des embases 9, ces différents moyens de commande tiennent compte, de préférence, de la force et l'orientation du vent, avantageusement également de la position de l'engin de déplacement par rapport à la surface sur laquelle il se déplace. Avantageusement, ces différents moyens de commande sont regroupés dans des moyens de commande uniques.

De préférence, ces moyens de commande sont mises en oeuvre et gérés par des moyens logiciels et matériels, classiquement un ordinateur, comprenant de préférence une mémoire dans laquelle sont stockés une ou plusieurs procédures préprogrammées de basculement de l'aile de propulsion 1 selon l'invention.

L'aile de propulsion 1 selon l'invention peut être utilisée pour la propulsion principale ou auxiliaire d'un engin de déplacement terrestre, comme par exemple un char à voile ou une planche à voile à roulette, ou un bateau ou navire maritime, pour un usage de loisir, sportif ou commercial.

La présente invention concerne également un engin de déplacement comprenant au moins une, de préférence une multitude d'ailes de propulsion 1 selon l'invention.

L'engin de déplacement est de préférence un engin terrestre, sur glace ou nautique, et peut être un bateau ou une planche à voile, un char ou une planche à roulette.

## Revendications

1. Aile de propulsion (1) rigide pour engin de déplacement, comprenant au moins une première section (2) et une deuxième section (3), une première extrémité (6), formée par une des extrémités de ladite première section (2), et une deuxième extrémité (7), formée par une des extrémités de ladite seconde section (3), lesdites extrémités (6, 7) comprenant chacune des moyens (8) de fixation pour une liaison réversible audit engin de déplacement, ladite première section (2) et ladite deuxième section (3) étant mobiles l'une par rapport à l'autre à l'aide de moyens d'articulation (5) pour que ladite aile de propulsion (1) prenne, et passe, d'au moins une première position dépliée à une seconde position dépliée, et inversement, des positions dépliées dans lesquelles ladite première section (2), et ladite seconde section (3) sont disposées, sensiblement verticalement, dans le prolongement l'une de l'autre, et dans lesquelles, ladite première extrémité (6), ou respectivement ladite deuxième extrémité (7), étant liées, de façon réversible, audit engin de déplacement à l'aide de leur moyens (8) de fixation.

2. L'aile de propulsion (1) selon la revendication 1, comprenant en outre une section intermédiaire (4), disposée entre, et mobile par rapport à, la première section (2) et la seconde section (3), à l'aide des moyens d'articulation (5).

3. L'aile de propulsion (1) selon l'une quelconque des revendications 1 ou 2, dans laquelle la première section (2), la deuxième section (3), et la section intermédiaire si elle est présente, sont mobiles l'une par rapport à l'autre, à l'aide des moyens d'articulation (5) pour que ladite aile de propulsion (1) prenne, et passe par, une position intermédiaire entre la première et la deuxième position dépliée, dans laquelle ladite première section (2) et la deuxième section (3) sont disposées, sensiblement parallèles l'une à l'autre, de part et d'autre d'un plan de symétrie sensiblement vertical, et dans laquelle la première extrémité (6) et la deuxième extrémité (7) sont toutes les deux liées, de façon réversible, audit engin de déplacement, à l'aide de leur moyens (8) de fixation.

4. L'aile de propulsion (1) selon l'une quelconque des revendications précédentes, dans laquelle la première section (2), la deuxième section (3), et éventuellement la section intermédiaire (4) si elle est présente, possèdent un profil aérodynamique asymétrique.

5. L'aile de propulsion (1) selon l'une quelconque des revendications précédentes, dans laquelle les moyens d'articulation (5) comprennent une bielle (18) engagent la tige mobile (22, 23) de deux vérins (24, 25) fixés respectivement à la première section (2) et la deuxième section (3).

6. L'aile de propulsion (1) selon l'une quelconque des revendications précédentes, comprenant en outre des moyens (28) de verrouillage des moyens d'articulation (5).

7. L'aile de propulsion (1) selon l'une quelconque des revendications précédentes, comprenant en outre des moyens d'actionnement des moyens d'articulation (5) pour mettre en mouvement les sections (2, 3, 4), de ladite aile de propulsion (1), comprenant un ensemble de poulies (32) sur lesquelles chemine un câble (33) lesté, dont chaque extrémité est reliée à un treuil (34, 35).

8. L'aile de propulsion (1) selon l'une quelconque des revendications précédentes, comprenant en outre au moins une embase (9), mobile par rapport à l'engin de déplacement, et comprenant des premiers moyens (38) et des seconds moyens (39) pour recevoir respectivement les moyens (8) de fixation de la première extrémité (6) et les moyens (8) de fixation de la deuxième extrémité (7) de ladite aile de propulsion (1).

9. L'aile de propulsion (1) selon la revendication 8, dans laquelle les moyens (8) de fixation de la première extrémité (6) et les moyens (8) de fixation de la deuxième extrémité (7) comprennent chacun une platine (44) de fixation munie des deux rainures (42, 43), et dans laquelle les premiers moyens et des seconds moyens (38, 39), pour recevoir lesdits moyens (8) de fixation, comprennent deux plots (40, 41), fixés à l'embase (9) et destinés à engager, et en fonctionnement, engageant, lesdites rainures (42, 43).

10. L'aile de propulsion (1) selon l'une quelconque des revendications précédentes, comprenant en outre ou coopérant avec des premiers et second moyens (50) de verrouillage pour le blocage des moyens (8) de fixation respectivement de la première extrémité (6) et de la deuxième extrémité (7), lesdits moyens (50) de verrouillage comprenant chacun une actionneur à ressort (51).

11. L'aile de propulsion (1) selon la revendication 10, comprenant en outre ou coopérant avec des moyens (56) interdisant l'ouverture simultanée des premiers et second moyens (50) de verrouillage.

12. L'aile de propulsion (1) selon l'une quelconque des revendications précédentes, comprenant en outre une dérive (59) disposée sur une des sections (2, 3, 4) de ladite aile de propulsion (1), et/ou une ou plusieurs ailettes (60, 61), disposées à la première extrémité (6) et/ou de la deuxième extrémité (7).

13. L'aile de propulsion (1) selon l'une quelconque des revendications précédentes, comprenant en outre ou coopérant avec des moyens de commande des moyens d'articulation (5) et/ou des moyens de commande de moyens de contrôle de l'incidence de ladite aile de propulsion (1) par rapport au sens du vent.

14. Utilisation de l'aile de propulsion (1) selon l'une quelconque des revendications 1 à 13 pour la propulsion principale ou auxiliaire d'un engin de déplacement.

15. Engin de déplacement, maritime ou terrestre, comprenant une ou plusieurs ailes de propulsion selon l'une quelconque des revendications 1 à 13.

## Patentansprüche

1. Starrer Antriebsflügel (1) für ein sich bewegendes Fahrzeug, umfassend mindestens einen ersten Abschnitt (2) und einen zweiten Abschnitt (3), ein erstes Ende (6), das durch eines der Enden des ersten Abschnitts (2) gebildet ist, und ein zweites Ende (7), das durch eines der Enden des zweiten Abschnitts (3) gebildet ist, die zwei Enden (6, 7) umfassend jeweils eine der Befestigungseinrichtungen (8) für eine umkehrbare Verbindung mit dem sich bewegenden Fahrzeug, wobei der erste Abschnitt (2) und der zweite Abschnitt (3) mittels Gelenkeinrichtungen (5) in Bezug aufeinander beweglich sind, sodass Antriebsflügel (1) von mindestens einer ersten ausgeklappten Position in eine zweite ausgeklappte Position übergehen kann, und umgekehrt, wobei der erste Abschnitt (2) und der zweite Abschnitt (3) in der Verlängerung des einen und anderen in annähernd vertikaler Richtung angeordnet sind, und wobei das erste Ende (6) oder bzw. das zweite (7) Ende mittels ihrer Befestigungseinrichtungen (8) umkehrbar mit dem sich bewegenden Fahrzeug verbunden sind.

2. Antriebsflügel (1) nach Anspruch 1, ferner umfassend einen Zwischenabschnitt (4), der mittels Gelenkeinrichtungen (5) zwischen dem ersten Abschnitt (2) und dem zweiten Abschnitt (3) angeordnet und in Bezug darauf beweglich ist.

3. Antriebsflügel (1) nach einem der Ansprüche 1 oder 2, wobei der erste Abschnitt (2), der zweite Abschnitt (3) und, wenn vorhanden, der Zwischenabschnitt mittels Gelenkeinrichtungen (5) in Bezug aufeinander beweglich sind, sodass der Antriebsflügel (1) eine Zwischenposition zwischen der ersten und der zweiten ausgeklappten Position einnehmen und diese durchlaufen kann, wobei der erste Abschnitt (2) und der zweite Abschnitt (3) zu beiden Seiten einer im Wesentlichen vertikalen Symmetrieebene parallel zueinander angeordnet sind, und wobei das erste Ende (6) und das zweite (7) Ende bei mittels ihrer Befestigungseinrichtungen (8) auf umkehrbare Weise mit dem sich bewegenden Fahrzeug verbunden sind.

4. Antriebsflügel (1) nach einem der vorherigen Ansprüche, wobei der erste Abschnitt (2), der zweite Abschnitt (3) und möglicherweise der Zwischenabschnitt (4), wenn vorhanden, ein asymmetrisches aerodynamisches Profil besitzen.

5. Antriebsflügel (1) nach einem der vorherigen Ansprüche, wobei die Gelenkeinrichtungen (5) eine Kurbelstange (18) umfassen, die die bewegliche Stange (22, 23) von zwei Zylindern (24, 25) eingreift, die jeweils an dem ersten Abschnitt (2) und dem zweiten Abschnitt (3) befestigt sind.

6. Antriebsflügel (1) nach einem der vorherigen Ansprüche, ferner umfassend Verriegelungseinrichtungen (28) der Gelenkeinrichtungen (5).

7. Antriebsflügel (1) nach einem der vorherigen Ansprüche, ferner umfassend zusätzlich zu den Betätigungseinrichtungen der Gelenkeinrichtungen (5), um die Abschnitte (2, 3, 4) des Antriebsflügels (1) in Bewegung zu versetzen, umfassend eine Reihe von Rollen (32), über die ein beschwertes Seil (33) läuft, wovon jedes Ende mit einer Winde (34, 35) verbunden ist.

8. Antriebsflügel (1) nach einem der vorherigen Ansprüche, ferner umfassend mindestens eine Basis (9), die in Bezug auf das sich bewegende Fahrzeug beweglich ist, und umfassend erste Einrichtungen (38) und zweite Einrichtungen (39) zum Aufnehmen der Einrichtungen (8) zur Befestigung des ersten Endes (6) bzw. der Einrichtungen (8) zur Befestigung des zweiten Endes (7) des Antriebsflügels (1).

9. Antriebsflügel (1) nach Anspruch 8, wobei die Befestigungseinrichtungen (8) des ersten Endes (6) und die Befestigungseinrichtungen (8) des zweiten Endes (7) jeweils eine Befestigungsplatte (44) umfassen, die mit zwei Nuten (42, 43) versehen ist, und wobei die ersten und die zweiten Einrichtungen (38, 39) zum Aufnehmen der Betätigungseinrichtungen (8) zwei Stifte (40, 41) umfassen, die an der Basis (9) befestigt sind und dazu bestimmt sind, die Nuten (42, 43) einzugreifen und im Betrieb eingreifen.

10. Antriebsflügel (1) nach einem der vorherigen Ansprüche, ferner umfassend eine erste und eine zweite Verriegelungseinrichtung (50) zum Blockieren der jeweiligen Befestigungseinrichtungen (8) des ersten Endes (6) und des zweiten Endes (7) oder damit zusammenwirkend, die Verriegelungseinrichtungen (50) jeweils umfassend einen Federaktuator (51).

11. Antriebsflügel (1) nach Anspruch 10, ferner umfassend oder zusammenwirkend mit Einrichtungen (56), die ein gleichzeitiges Öffnen der ersten und der zweiten Verriegelungseinrichtung (50) verhindern.

12. Antriebsflügel (1) nach einem der vorherigen Ansprüche, ferner umfassend einen Abtrieb (59), der auf einem der Abschnitte (2, 3, 4) des Antriebsflügels (1) angeordnet ist, und/oder einen oder mehrere Flügel (60, 61) an dem ersten Ende (6) und/oder dem zweiten Ende (7).

13. Antriebsflügel (1) nach einem der vorherigen Ansprüche, ferner umfassend oder zusammenwirkend mit Steuereinrichtungen der Gelenkeinrichtungen (5) und/oder Steuereinrichtungen von Kontrolleinrichtungen des Anstellwinkels des Antriebsflügels (1) in Bezug auf die Windrichtung.

14. Verwendung eines Antriebsflügels (1) nach einem der Ansprüche 1 bis 13 für den Haupt- oder Hilfsantrieb eines sich bewegenden Fahrzeugs.

15. Sich bewegendes Schiffs- oder Landfahrzeug, umfassend einen oder mehrere Antriebsflügel nach einem der Ansprüche 1 bis 13.

## Claims

1. Rigid propulsion wing (1) for a travelling vehicle, comprising at least one first section (2) and one second section (3), a first end (6), formed by one of the ends of said first section (2), and a second end (7), formed by one of the ends of said second section (3), said ends (6, 7) each comprising attachment means (8) for reversibly connecting to said travelling vehicle, said first section (2) and said second section (3) being movable with respect to each other by means of articulating means (5) such that said propulsion wing (1) assumes, and moves from, at least a first deployed position to a second deployed position, and vice versa, in which deployed positions said first section (2) and said second section (3) are arranged, substantially vertically, in the extension of one another, and in which said first end (6), or respectively said second end (7), are reversibly connected to said travelling vehicle by means of the attachment means (8) thereof.

2. The propulsion wing (1) according to claim 1, further comprising an intermediate section (4), arranged between, and movable with respect to, the first section (2) and the second section (3), using articulating means (5).

3. The propulsion wing (1) according to any one of claims 1 or 2, wherein the first section (2), the second section (3), and the intermediate section if it is present, are movable with respect to one another using articulating means (5) so that said propulsion wing (1) assumes, and moves through, an intermediate position between the first and the second deployed position, in which said first section (2) and the second section (3) are arranged, substantially parallel to one another, on either side of a substantially vertical plane of symmetry, and in which the first end (6) and the second end (7) are both connected, reversibly, to said travelling vehicle, using the attachment means (8) thereof.

4. The propulsion wing (1) according to any one of the preceding claims, wherein the first section (2), the second section (3), and optionally the intermediate section (4) if it is present, have an asymmetrical aerodynamic profile.

5. The propulsion wing (1) according to any one of the preceding claims, wherein the articulating means (5) comprise a connecting rod (18) engaging the movable rod (22, 23) of two cylinders (24, 25) respectively attached to the first section (2) and the second section (3).

6. The propulsion wing (1) according to any one of the preceding claims, further comprising locking means (28) for locking the articulating means (5).

7. The propulsion wing (1) according to any one of the preceding claims, further comprising means for actuating the articulating means (5) to set the sections (2, 3, 4) of said propulsion wing (1) in motion, comprising a set of pulleys (32) on which a ballasted cable (33) travels, each end of which is connected to a winch (34, 35).

8. The propulsion wing (1) according to any one of the preceding claims, further comprising at least one base (9), movable relative to the travelling vehicle, and comprising first means (38) and second means (39) for respectively receiving the attachment means (8) of the first end (6) and the attachment means (8) of the second end (7) of said propulsion wing (1).

9. The propulsion wing (1) according to claim 8, wherein the attachment means (8) of the first end (6) and the attachment means (8) of the second end (7) each comprise an attachment plate (44) provided with two grooves (42, 43), and wherein the first means and the second means (38, 39) for receiving said attachment means (8) comprise two studs (40, 41), attached to the base (9) and intended to engage, and during operation, engaging, the grooves (42, 43).

10. The propulsion wing (1) according to any one of the preceding claims, further comprising or cooperating with first and second locking means (50) for blocking the attachment means (8) of the first end (6) and the second end (7), respectively, said locking means (50) each comprising a spring-loaded actuator (51).

11. The propulsion wing (1) according to claim 10, further comprising or cooperating with means (56) prohibiting the simultaneous opening of the first and second locking means (50).

12. The propulsion wing (1) according to any one of the preceding claims, further comprising a center board (59) arranged under one of the sections (2, 3, 4) of said propulsion wing (1), and/or one or several fins (60, 61), arranged at the first end (6) and/or the second end (7).

13. The propulsion wing (1) according to any one of the preceding claims, further comprising or cooperating with control means of the articulating means (5) and/or control means of means for controlling the incidence of the propulsion wing (1) relative to the direction of the wind.

14. Use of the propulsion wing (1) according to any one of claims 1 to 13 for the primary, or backup, propulsion of a travelling vehicle.

15. A travelling vehicle, whether maritime or land-based, comprising one or several propulsion wings according to any one of claims 1 to 13.
